# EUROPÄISCHE PATENTSCHRIFT

(11) **EP 3 538 774 B1**
(45) Veröffentlichungstag und Bekanntmachung des Hinweises auf die Patenterteilung: **20.12.2023**
(21) Anmeldenummer: 18700529.3
(22) Anmeldetag: 04.01.2018
(51) Int. Cl.: F16B 5/04

(54) **FLANSCHVERBINDUNG ZUR VERBINDUNG ZWEIER BAUTEILE**
FLANGE CONNECTION FOR CONNECTING TWO COMPONENTS
SYSTÈME DE RACCORDEMENT À BRIDE PERMETTANT DE RACCORDER DEUX COMPOSANTS

(30) Priorität: 18.01.2017 DE 102017200750
(43) Veröffentlichungstag der Anmeldung: 18.09.2019
(73) Patentinhaber: Siemens Mobility GmbH, 81739 München (DE)
(72) Erfinder: SCHMIDT, Gerhard, 45127 Essen (DE)
(74) Vertreter: Siemens Patent Attorneys
(86) Internationale Anmeldenummer: PCT/EP2018/050175
(87) Internationale Veröffentlichungsnummer: WO 2018/134055

(56) Entgegenhaltungen:
- WO-A1-01/32490
- DE-A1- 3 716 678
- DE-A1- 4 440 425
- DE-A1-102004 036 929

## Beschreibung

Die vorliegende Erfindung betrifft eine Verbindungsanordnung mit einem ersten Bauteil, einem zweiten Bauteil und einer Flanschverbindung, mittels welcher das erste Bauteil an dem zweiten Bauteil fixiert ist, und welche einen Flansch aufweist, mittels welchen die Flanschverbindung samt dem mit der Flanschverbindung verbundenen ersten Bauteil an dem zweiten Bauteil fixiert, insbesondere vernietet oder verschraubt ist.

Aus der DE 10 2004 036929 A1 ist eine Pralldämpferanordnung für ein Kraftfahrzeug bekannt.

Die Verbindung zweier Bauteile mittels einer Flanschverbindung ist oft nicht problemlos möglich. Zur funktionssicheren Montage der Verbindung zweier Bauteile, insbesondere zweier Maschinenbauteile, über mindestens eine Flanschverbindung ist eine vollflächige Anlage der Flansche an den Bauteilen der Flanschverbindung erforderlich. Neben der Ebenheitsanforderung an die einzelnen Flanschflächen der zum Einsatz kommenden Flansche müssen bei der Verwendung mehrerer separater Flansche diese auch räumlich passend zueinander ausgerichtet sein. Ferner kann es bei beispielsweise im Betrieb der über die Flanschverbindung verbundenen Maschinenbauteile bestehenden Temperaturdifferenzen, insbesondere bei der Verwendung von Materialien mit stark voneinander abweichenden Ausdehnungskoeffizienten - zum Beispiel bei der Verwendung von Stahl und Aluminium - zu Verspannungen kommen, die zu Beschädigungen an den Bauteilen der Flanschverbindung oder allgemein zu einem Rutschen der Flanschverbindung entlang der Flanschflächen führen können.

Verschiedene Lösungen für die zuvor beschriebenen Probleme sind dem Stand der Technik bekannt. Im günstigsten Fall reichen die Fertigungspräzision und die inhärente Elastizität der Bauteile der Flanschverbindung beziehungsweise der mittels der Flanschverbindung verbundenen Bauteile aus, um ein Klaffen der Flanschflächen zu vermeiden. Des Weiteren ist es üblich, alle Flanschflächen an einem oder an beiden der mittels der Flanschverbindung zu verbindenden Bauteile durch Fräsen oder Schleifen eben zu bearbeiten. Bei verbleibenden, zu berücksichtigenden potentiellen Lagetoleranzen der Flanschflächen aufgrund verbleibender, einzuhaltender Fertigungstoleranzen, oder auch aufgrund zu erwartender mechanischer oder thermischer Verformungen, ist der Einsatz beweglicher Elemente üblich.

Derartige bewegliche Elemente können beispielsweise statisch bestimmte Anordnungen mit Lenkerstangen oder elastische Lagerungen sein, die auch zusätzliche Funktionalitäten wie beispielsweise eine Schwingungsentkopplung bieten können. Neben den Kosten für solche beweglichen Elemente ist oft auch deren lediglich begrenzte Belastbarkeit nachteilig.

Weiterhin sind dem Stand der Technik Flanschverbindungen bekannt, bei welchen eine sogenannte Flanschabstützung über ein in Lastrichtung orientiert verbautes, ebenes Blech erreicht wird. Durch die geringe Steifigkeit außerhalb der Blechebene ist eine entsprechende translatorische sowie eine rotatorische Anpassung der Flanschverbindung möglich. Eine solche Flanschverbindung kommt beispielsweise als Verbindungsmittel für bestimmte Crashmodule in Schienenfahrzeugen zum Einsatz.

An derartigen Flanschverbindungen nachteilig ist die Konzentration der Last auf einen einzigen Strukturquerschnitt, welcher meist als Blechquerschnitt ausgeführt ist. Diese Lastkonzentration bedingt einen hohen Aufwand für den kraftflussgerechten Anschluss an die weiterführende Bauteilstruktur.

Es ist daher eine Aufgabe der vorliegenden Erfindung, eine Flanschverbindung für die Verbindung von Bauteilen zur Verfügung zu stellen, welche eine stabile Verbindung zweier Bauteile, insbesondere zweier Maschinenbauteile, trotz eventueller Toleranz- beziehungsweise Lageabweichungen bei einem gegenüber dem Stand der Technik optimierten Kraftfluss ermöglicht.

Erfindungsgemäß wird eine Verbindungsanordnung mit einem ersten Bauteil, einem zweiten Bauteil und einer Flanschverbindung zur Verfügung gestellt, mittels welcher ein erstes Bauteil an einem zweiten Bauteil fixiert ist. Die Flanschverbindung umfasst einen Flansch, mittels welchen die Flanschverbindung samt dem mit der Flanschverbindung verbundenen ersten Bauteil an dem zweiten Bauteil fixiert, insbesondere vernietet oder verschraubt ist. Erfindungsgemäß weist die Flanschverbindung in mindestens einem ersten Last übertragenden Querschnitt eine Anordnung von mindestens zwei räumlich zueinander versetzten ersten Blattlenker-Elementen auf, die sich in einer Nominallage jeweils zumindest teilweise räumlich in jeweils einer Ebene erstrecken und über welche das erste Bauteil an den Flansch angebunden ist.

Der Vorteil einer derartigen Verbindungsanordnung ist, dass sich die Last beziehungsweise die über die Flanschverbindung übertragene Flanschkraft nicht auf einen einzigen Strukturbeziehungsweise Blechquerschnitt konzentriert, sondern über die Blattlenker-Elemente übertragen wird. Ferner ermöglicht diese Flanschverbindung eine Winkelanpassung der mittels der Flanschverbindung miteinander verbundenen Bauteile.

Bevorzugt wird die gesamte, über die Flanschverbindung übertragene Kraft in dem mindestens einen ersten Last übertragenden Querschnitt der Flanschverbindung über die Anordnung aus den mindestens zwei räumlich zueinander versetzten ersten Blattlenker-Elementen übertragen.

Bevorzugt beschreibt die Nominallage der ersten Blattlenker-Elemente eine Lage oder einen Zustand der ersten Blattlenker-Elemente, in welchem die ersten Blattlenker-Elemente nicht belastet sind, also keine Kraft auf diese wirkt.

Bevorzugt sind die Blattlenker-Elemente als längliche, dünnwandige Strukturen ausgeführt, die in mindestens einer ersten Richtung biegesteif, also starr beziehungsweise stabil gegenüber einer Krafteinwirkung in dieser ersten Richtung sind und in mindestens einer zweiten Richtung biegeelastisch, also biegbar beziehungsweise verformbar in dieser zweiten Richtung sind.

Bevorzugt sind die mindestens zwei ersten Blattlenker-Elemente als plattenförmige Strukturen, insbesondere als Bleche ausgeführt. Besonders bevorzugt sind die mindestens zwei ersten Blattlenker-Elemente als dünnwandige Strukturen ausgeführt. Bevorzugt umfassen die ersten Blattlenker-Elemente zwei gegenüberliegende erste Seitenflächen, die jeweils um ein Vielfaches größer sind als die anderen Seitenflächen beziehungsweise Kantenflächen der ersten Blattlenker-Elemente. In einer derartigen Ausführung erlauben die ersten Blattlenker-Elemente eine Bewegung der mittels der Flanschverbindung miteinander verbundenen Bauteile gegeneinander beziehungsweise relativ zueinander entlang einer Richtung, die im Wesentlichen senkrecht zu den ersten Seitenflächen der ersten Blattlenker-Elemente verläuft. Entlang einer Richtung, welche im Wesentlichen parallel zu den ersten Seitenflächen der ersten Blattlenker-Elemente verläuft, sind die ersten Blattlenker-Elemente starr und mithin ist eine Bewegung der Maschinebauteile blockiert.

Bevorzugt weist das erste Bauteil eine Bauteilstruktur auf, aus welcher die ersten Blattlenker-Elemente herausragen beziehungsweise innerhalb welcher die ersten Blattlenker-Elemente angeordnet beziehungsweise fixiert sind.

In einer bevorzugten Ausführungsform sind die mindestens zwei räumlich zueinander versetzten ersten Blattlenker-Elemente über ein Zwischenstück miteinander verbunden. In einer derartigen Ausführungsform ist die Flanschverbindung besonders stabil, da die Flanschkraft innerhalb der Flanschverbindung auch über das Zwischenstück übertragen wird. Bevorzugt ist auch das Zwischenstück als dünnwandige Struktur, insbesondere als längliches Blech ausgeführt.

Bevorzugt fungieren die ersten Blattlenker-Elemente als Festkörpergelenke. Ferner bevorzugt sind die Blattlenker-Elemente als Blattfeder-Elemente ausgeführt.

Vorzugsweise sind die Ebenen, innerhalb derer sich die mindestens zwei zueinander räumlich versetzten ersten Blattlenker-Elemente zumindest teilweise erstrecken, in Nominallage der ersten Blattlenker-Elemente zueinander angewinkelt. In einer derartigen Ausführungsform sind die beiden Bauteile noch stabiler aneinander fixiert, da die ersten Blattlenker-Elemente einer Bewegung der Bauteile gegenüber einander, also relativ zueinander, stärker entgegenwirken.

In einer bevorzugten Ausführungsform schneiden sich die Mittenebenen der ersten Blattlenker-Elemente auf einer Wirkungslinie der Flanschkraft in einer gemeinsamen ersten ideellen Gelenklinie. Bevorzugt schneiden sich die Mittenebenen der ersten Blattlenker-Elemente also auf einer Geraden, die einen Schnittpunkt mit der Wirkungslinie der Flanschkraft hat und eine erste ideelle Gelenklinie beziehungsweise eine erste ideelle Gelenkachse der ersten Blattlenker-Elemente darstellt. In einer bevorzugten Ausführungsform liegt die erste ideelle Gelenklinie, also die Schnittgerade der Mittenebenen der ersten Blattlenker-Elemente, in unmittelbarer Nähe zu dem Flansch. Ferner bevorzugt liegt die ideelle Gelenklinie unmittelbar vor dem Flansch beziehungsweise unmittelbar benachbart zu dem Flansch. In einer derartigen Ausführungsform ist eine Winkelanpassung der Bauteile über die Flanschverbindung besonders effizient möglich.

Vorzugsweise weist die Flanschverbindung in mindestens einem zweiten Last übertragenden Querschnitt ferner eine Anordnung aus mindestens zwei räumlich zueinander und in Lastrichtung zu den ersten Blattlenker-Elementen versetzten zweiten Blattlenker-Elementen auf, die sich in Nominallage jeweils zumindest teilweise räumlich in jeweils einer Ebene erstrecken, wobei das erste Bauteil über die ersten und zweiten Blattlenker-Elemente an den Flansch angebunden ist. In einer derartigen Ausführungsform bietet die erfindungsgemäße Flanschverbindung auch eine zusätzliche translatorische Beweglichkeit, zum Beispiel zur Kompensation von Temperaturausdehnungen.

Bevorzugt wird die gesamte über die Flanschverbindung übertragene Kraft in dem mindestens einen zweiten Last übertragenden Querschnitt über die Anordnung aus den mindestens zwei räumlich zueinander versetzten zweiten Blattlenker-Elementen übertragen.

Besonders bevorzugt sind auch die mindestens zwei zweiten Blattlenker-Elemente als dünnwandige Strukturen ausgeführt. Bevorzugt umfassen die zweiten Blattlenker-Elemente zwei gegenüberliegende erste Seitenflächen, die jeweils um ein Vielfaches größer sind als die anderen Seitenflächen der zweiten Blattlenker-Elemente. In einer derartigen Ausführungsform erlauben die zweiten Blattlenker-Elemente eine Bewegung der mittels der Flanschverbindung miteinander verbundenen Bauteile gegeneinander beziehungsweise relativ zueinander entlang einer Richtung, die im Wesentlichen senkrecht zu den ersten Seitenflächen der zweiten Blattlenker-Elemente verläuft. Entlang einer Richtung, welche im Wesentlichen parallel zu den ersten Seitenflächen der zweiten Blattlenker-Elemente verläuft, sind die zweiten Blattlenker-Elemente starr und mithin ist eine Bewegung der Maschinebauteile blockiert.

In einer bevorzugten Ausführungsform sind auch die mindestens zwei zweiten Blattlenker-Elemente als plattenförmige Strukturen, insbesondere als Bleche ausgeführt und schneiden sich die Mittenebenen der zweiten Blattlenker-Elemente auf der Wirkungslinie der Flanschkraft in einer gemeinsamen zweiten ideellen Gelenklinie, welche zu der ersten ideellen Gelenklinie parallel verläuft. Bevorzugt schneiden sich die Mittenebenen der zweiten Blattlenker-Elemente auf der Wirkungslinie der Flanschkraft in einer gemeinsamen zweiten ideellen Gelenkachse. Des Weiteren bevorzugt ist die zweite ideelle Gelenklinie gegenüber der ersten ideellen Gelenklinie entlang der Wirkungslinie der Flanschkraft parallel verschoben. Bevorzugt ist also die erste ideelle Gelenklinie parallel zu der zweiten ideellen Gelenklinie beabstandet.

Bevorzugt ist die Mittenebene eines ersten Blattlenker-Elementes der ersten Blattlenker-Elemente parallel zu der Mittenebene eines zweiten Blattlenker-Elementes der zweiten Blattlenker-Elemente.

Vorzugsweise sind auch die mindestens zwei räumlich zueinander versetzten zweiten Blattlenker-Elemente über das Zwischenstück miteinander und mit den ersten Blattlenker-Elementen verbunden. In einer derartigen Ausführung wirkt die Anordnung aus den ersten und zweiten Blattlenker-Elementen sowie dem Zwischenstück wie eine Lenkerstange, die in der ersten und zweiten ideellen Gelenkachse an dem Flansch beziehungsweise an der Bauteilstruktur des ersten Bauteils gelagert ist. Bevorzugt sind die mindestens zwei räumlich zueinander versetzten zweiten Blattlenker-Elemente über das Zwischenstück mit den ersten Blattlenker-Elementen verbunden.

Bevorzugt sind die ersten Blattlenker-Elemente plastisch oder elastisch verformbar. Bevorzugt sind auch die zweiten Blattlenker-Elemente plastisch oder elastisch verformbar. Insbesondere eine plastische Verformbarkeit der ersten und/oder zweiten Blattlenker-Elemente eignet sich zur vorteilhaften Aufnahme von Montagetoleranzen. Montagetoleranzen beziehungsweise das Abweichen der Bauteile von eben diesen Montagetoleranzen kann auf diese Weise vorteilhaft kompensiert werden.

In einer bevorzugten Ausführungsform weist die Flanschverbindung in mindestens einem dritten Last übertragenden Querschnitt eine Anordnung von mindestens zwei weiteren, räumlich zueinander versetzten Blattlenker-Elementen auf, die sich in Nominallage jeweils zumindest teilweise räumlich in jeweils einer Ebene erstrecken, welche jeweils gegenüber den Erstreckungsebenen der ersten Blattlenker-Elemente gedreht sind. In einer derartigen Ausführungsform ermöglicht die Flanschverbindung eine kardanische Beweglichkeit der über sie miteinander verbundenen Bauteile gegeneinander.

Bevorzugt wird die gesamte über die Flanschverbindung übertragene Kraft in dem mindestens einen dritten Last übertragenden Querschnitt der Flanschverbindung über die Anordnung aus den mindestens zwei räumlich zueinander versetzten, weiteren Blattlenker-Elementen übertragen.

Bevorzugt ist ein weiterer Satz von Blattlenker-Elementen mit einer ideellen Gelenklinie vorgesehen. Ferner bevorzugt sind weitere Sätze von Blattlenker-Elementen mit zwei zueinander parallelen, ideellen Gelenklinien vorgesehen, welche derart angeordnet sind, dass die zu den ideellen Gelenklinien jeweils senkrecht stehenden Bewegungsebenen der Flanschverbindung gegenüber der senkrecht zu der ersten und zweiten ideellen Gelenklinie stehenden Bewegungsebene angewinkelt sind beziehungsweise einen Winkel mit dieser einschließen.

Bevorzugt sind die Blattlenker-Elemente in geschweißter Blechbauweise gefertigt und/oder in angrenzende Konstruktionsstrukturen und/oder Bauteilstrukturen der mit der Flanschverbindung verbundenen Bauteile integriert.

Bevorzugt sind die durch die Anordnung der ersten, zweiten und/oder weiteren Blattlenker-Elemente bereitgestellten Bewegungsebenen der mittels der Flanschverbindung verbundenen Bauteile zueinander angewinkelt beziehungsweise zueinander verdreht. Insbesondere bevorzugt sind mindestens zwei der zuvor beschriebenen Bewegungsebenen senkrecht zueinander ausgerichtet. Bevorzugt werden der Flanschverbindung mehrere weitere Bewegungsebenen durch weitere Sätze von weiteren Blattlenker-Elementen zur Verfügung gestellt. Mit anderen Worten ausgedrückt, umfasst die Flanschverbindung bevorzugt in mindestens einem weiteren Last übertragenden Querschnitt eine Anordnung von mindestens zwei weiteren, räumlich zueinander versetzten Blattlenker-Elementen, die sich in Nominallage jeweils zumindest teilweise räumlich in jeweils einer Ebene erstrecken, welche jeweils gegenüber den Erstreckungsebenen der ersten Blattlenker-Elemente gedreht, insbesondere um 90° verdreht ist.

Ferner bevorzugt ist der Flansch über mindestens eine weitere Struktur an die Bauteilstruktur des ersten Bauteils angebunden. Ferner bevorzugt vermag diese mindestens eine weitere Struktur eine Beeinflussung oder eine Einschränkung der Beweglichkeit der Bauteile gegenüber einander zu bewirken.

Bevorzugt sind die ersten, zweiten und weiteren Blattlenker-Elemente in einer Nominallage eben.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden. Es zeigen:
- Figur 1: einen Querschnitt durch ein erstes Ausführungsbeispiel einer erfindungsgemäßen Flanschverbindung;
- Figur 2: eine schematische mechanische Ersatzdarstellung zum besseren Verständnis des ersten Ausführungsbeispiels der Erfindung; und
- Figur 3: einen weiteren Querschnitt durch das erste in Figur 1 dargestellte Ausführungsbeispiel.

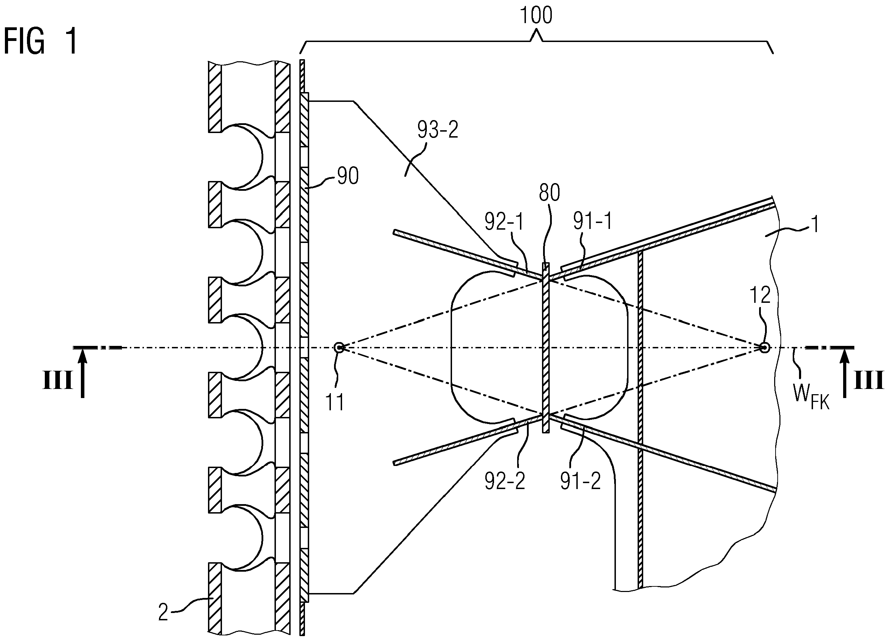

Die in den Figuren 1 bis 3 gleich bezeichneten Komponenten entsprechen einander identischen Komponenten, sodass das im Zusammenhang mit einer bestimmten Figur zu diesen Komponenten beschriebene auch für die in einer der anderen Figuren gleich bezeichneten Komponenten Geltung hat.

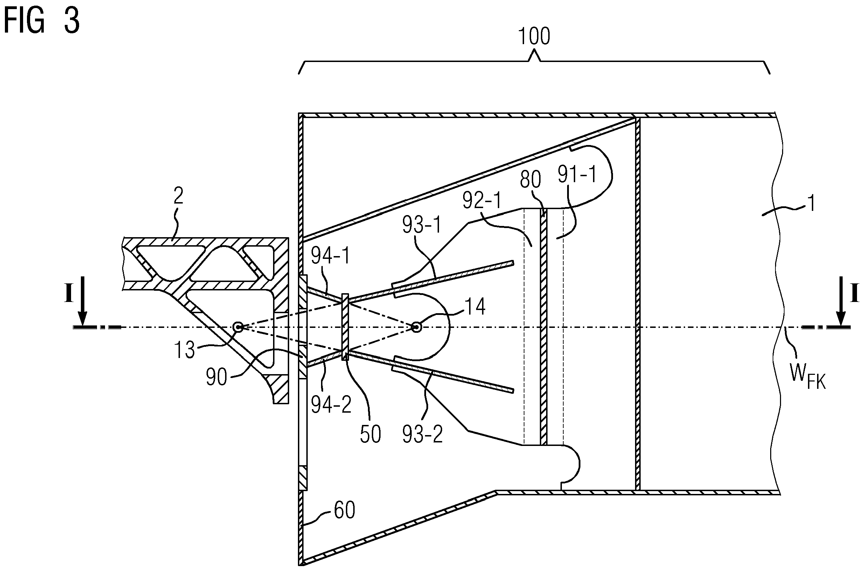

In der Figur 1 ist ein Querschnitt I-I durch ein erstes Ausführungsbeispiel einer erfindungsgemäßen Verbindungsanordnung mit einem ersten Bauteil 1, einem zweiten Bauteil 2 und einer Flanschverbindung 100 gezeigt. Die Schnittlinie I-I durch das erste Ausführungsbeispiel ist in Figur 3 dargestellt. Mittels der Flanschverbindung 100 wird in diesem Ausführungsbeispiel das erste Bauteil 1 an dem zweiten Bauteil 2 fixiert. In diesem Ausführungsbeispiel handelt es sich bei dem ersten Bauteil 1 rein beispielhaft um eine Befestigungskomponente eines Crashmoduls für ein Schienenfahrzeug, während es sich bei dem zweiten Bauteil 2 rein beispielhaft um eine Komponente eines Schienenfahrzeugs handelt. Die Flanschverbindung 100 kann aber auch zur Verbindung nahezu beliebiger anderer Bauteile, insbesondere zur Verbindung von Maschinenbauteilen zum Einsatz kommen.

Die Flanschverbindung 100 umfasst einen Flansch 90, mittels welchen das erste Bauteil 1 an das zweite Bauteil 2 angeflanscht ist, über welchen das erste Bauteil 1 also an dem zweiten Bauteil 2 befestigt ist. Die Befestigung erfolgt in diesem ersten Ausführungsbeispiel rein beispielhaft mittels einer Verschraubung des Flansches 90 an dem zweiten Bauteil 2, sie kann aber auch auf andere Art und Weise erfolgen. In diesem ersten Ausführungsbeispiel weist die Flanschverbindung 100 in einem ersten Last übertragenden Querschnitt eine Anordnung von zwei räumlich zueinander versetzten ersten Blattlenker-Elementen 91-1, 91-2 auf, die sich in einer Nominallage räumlich in jeweils einer Ebene erstrecken und über welche das erste Bauteil 1 an den Flansch 90 angebunden ist. Des Weiteren weist die Flanschverbindung 100 in diesem ersten Ausführungsbeispiel rein beispielhaft in einem zweiten Last übertragenden Querschnitt ferner eine Anordnung aus mindestens zwei räumlich zueinander und in Lastrichtung zu den ersten Blattlenker-Elementen 91-1, 91-2 versetzten zweiten Blattlenker-Elemente 92-1, 92-2 auf, die sich in Nominallage ebenfalls räumlich in jeweils einer Ebene erstrecken, wobei das erste Bauteil 1 über die ersten und zweiten Blattlenker-Elemente 91-1, 91-2, 92-1, 92-2 an den Flansch 90 angebunden ist.

Die ersten und zweiten Blattlenker-Elemente 91-1, 91-2, 92-1, 92-2 sind in diesem ersten Ausführungsbeispiel jeweils als dünnwandige Strukturen, genauer ausgedrückt, als Bleche ausgeführt, die sich in einem Zustand, in welchem sich die Flanschverbindung 100 nicht unter Last befindet, entlang von Ebenen erstrecken. Von den ersten und zweiten Blattlenker-Elementen 91-1, 91-2, 92-1, 92-2 sind in dem in Figur 1 dargestellten Querschnitt nur Seitenkanten zu sehen. Die ersten und zweiten Blattlenker-Elemente 91-1, 91-2, 92-1, 92-2 sind plastisch verformbar und weisen jeweils zwei gegenüberliegende erste Seitenflächen auf, die jeweils um ein Vielfaches größer sind als die anderen Seitenflächen beziehungsweise als die Kantenflächen der ersten und zweiten Blattlenker-Elemente 91-1, 91-2, 92-1, 92-2. Die ersten Seitenflächen sind beispielsweise um ein Vielfaches größer als die in Figur 1 sichtbaren Flächen der Seitenkanten der ersten und zweiten Blattlenker-Elemente 91-1, 91-2, 92-1, 92-2. Die Blickrichtung des Betrachters der Figur 1 verläuft parallel zu den ausgedehnten ersten Seitenflächen der ersten und zweiten Blattlenker-Elemente 91-1, 91-2, 92-1, 92-2.

Wirkt im Rahmen einer Belastung der Flanschverbindung 100 eine Kraft senkrecht auf diese ersten Seitenflächen, so vermögen sich die ersten und zweiten Blattlenker-Elemente 91-1, 91-2, 92-1, 92-2 plastisch zu verbiegen. Wirkt hingegen eine Kraft auf die Kantenflächen der ersten und zweiten Blattlenker-Elemente 91-1, 91-2, 92-1, 92-2, kommt es zu keiner Verbiegung der in dieser Richtung biegesteifen ersten und zweiten Blattlenker-Elemente 91-1, 91-2, 92-1, 92-2. Die ersten Blattlenker-Elemente 91-1, 91-2 sind in diesem ersten Ausführungsbeispiel von der Bauteilstruktur des ersten Bauteils 1 aufgenommen und an dieser befestigt. Die zweiten Blattlenker-Elemente 92-1, 92-2 sind in diesem Ausführungsbeispiel durch eine zwei weitere Blattlenker-Elemente fassende beziehungsweise aufnehmende Bauteilstruktur der Flanschverbindung 100 aufgenommen und an dieser befestigt, wobei von den zwei weiteren Blattlenker-Elementen in Figur 1 allerdings aufgrund der Schnittansicht nur eines 93-2 dargestellt ist. Dies wird im Zusammenhang mit der Figur 3 näher erläutert. Anstelle der Bauteilstruktur, welche die weiteren Blattlenker-Elemente aufnimmt, können die zweiten Blattlenker-Elemente 92-1, 92-2 aber auch beispielsweise über eine beliebige andere Haltestruktur mit dem Flansch 90 verbunden und auf diese Art und Weise innerhalb der Flanschverbindung 100 fixiert sein.

In diesem ersten Ausführungsbeispiel sind die mindestens zwei räumlich zueinander versetzten ersten Blattlenker-Elemente 91-1, 91-2 in einem unbelasteten Zustand der Flanschverbindung 100 zueinander angewinkelt angeordnet und über ein Zwischenstück 80 miteinander verbunden. Konkreter beschrieben, die ersten Blattlenker-Elemente 91-1, 91-2 nähern sich in Richtung des Flansches 90 einander an. Mit anderen Worten ausgedrückt, sind die Ebenen, innerhalb derer sich die zwei zueinander räumlich versetzten ersten Blattlenker-Elemente 91-1, 91-2 erstrecken, in Nominallage der ersten Blattlenker-Elemente 91-1, 91-2 zueinander angewinkelt und an ihren dem Flansch 90 zugewandten Endkanten mit einem Zwischenstück 80 verbunden. Das Zwischenstück 80 ist in diesem Ausführungsbeispiel ebenfalls als dünnwandige Struktur, genauer ausgedrückt, als Blech ausgeführt. Auch die zwei räumlich zueinander versetzten zweiten Blattlenker-Elemente 92-1, 92-2 sind in einem unbelasteten Zustand der Flanschverbindung 100 zueinander angewinkelt angeordnet und über das Zwischenstück 80 miteinander und mit den ersten Blattlenker-Elementen 91-1, 91-2 verbunden. Konkreter beschrieben nähern sich die zweiten Blattlenker-Elemente 92-1, 92-2 mit zunehmendem Abstand zu dem Flansch 90 einander an. Mit anderen Worten ausgedrückt, sind die Ebenen, innerhalb derer sich die zwei zueinander räumlich versetzten zweiten Blattlenker-Elemente 92-1, 92-2 erstrecken, in Nominallage der zweiten Blattlenker-Elemente 92-1, 92-2 zueinander angewinkelt und an ihren von dem Flansch 90 abgewandten Endkanten mit einem Zwischenstück 80 verbunden.

Die ersten Blattlenker-Element 91-1, 91-2 sind derart angeordnet, dass sich die Mittenebenen der ersten Blattlenker-Elemente 91-1, 91-2 auf einer Wirkungslinie der Flanschkraft W_{Fk} der Flanschverbindung 100 in einer gemeinsamen ersten ideellen Gelenklinie 11 schneiden. In Figur 1 ist die Wirkungslinie der Flanschkraft W_{Fk} als gestichelte Linie dargestellt. Die auf dieser Wirkungslinie der Flanschkraft W_{Fk} senkrecht stehende erste ideelle Gelenklinie 11 ist in Figur 1 als Punkt mit einem Kreis darum dargestellt, wobei die gedachte Verlängerung der Mittenebenen der ersten Blattlenker-Elemente 91-1, 91-2 in Figur 1 als Strichpunkt-Linie dargestellt ist.

Die zweiten Blattlenker-Elemente 92-1, 92-2 sind derart angeordnet, dass sich die Mittenebenen der zweiten Blattlenker-Elemente 92-1, 92-2 ebenfalls auf der Wirkungslinie der Flanschkraft W_{Fk} der Flanschverbindung 100 in einer gemeinsamen zweiten ideellen Gelenklinie 12 schneiden, welche zu der ersten ideellen Gelenklinie 11 parallel verläuft. Auch die gedachte Verlängerung der Mittenebenen der zweiten Blattlenker-Element 92-1, 92-2 ist in Figur 1 als Strichpunkt-Linie dargestellt, wobei auch die auf der Wirkungslinie der Flanschkraft W_{Fk} senkrecht stehende zweite ideelle Gelenklinie 12 in Figur 1 als Punkt mit einem Kreis darum dargestellt ist.

Diese Anordnung ermöglicht zum einen eine Winkelanpassung zwischen dem ersten und dem zweiten Bauteil 1, 2 und zum anderen eine zusätzliche translatorische Beweglichkeit, zum Beispiel zur Kompensation von Temperaturausdehnungen. Genauer beschrieben, wirkt die Anordnung wie eine Lenkerstange, die in den ideellen Gelenklinien 11 und 12 an dem Flansch 90 beziehungsweise an der Bauteilstruktur des ersten Bauteils 1 gelagert ist.

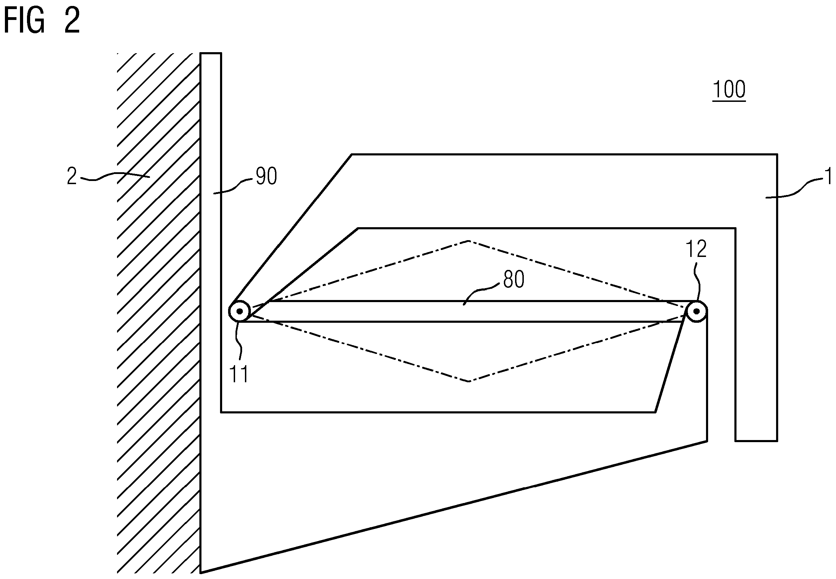

In Figur 2 ist zur Verdeutlichung dieser Analogie eine schematische, mechanische Ersatzdarstellung zum besseren Verständnis des ersten Ausführungsbeispiels der Erfindung dargestellt. Über den Flansch 90 ist das Bauteil 1 mittels der Flanschverbindung 100 an dem Bauteil 2 befestigt. Die ideellen Gelenklinien 11, 12 der ersten und zweiten Blattlenker-Elemente 91-1, 91-2, 92-1, 92-2, die auch als ideelle Gelenklinien 11, 12 bezeichnet werden können, ragen in Figur 2 aus der Bildebene heraus und sind in Figur 2 abermals als Punkte mit Kreisen darum dargestellt. Durch die ersten und zweiten Blattlenker-Elemente 91-1, 91-2, 92-1, 92-2 wird im Zusammenspiel mit dem Zwischenstück 80 die einer Lenkerstange ähnliche Funktionsweise der Flanschverbindung 100 realisiert.

In Figur 1 ist eine Schnittlinie III-III durch das erste Ausführungsbeispiel einer erfindungsgemäßen Flanschverbindung 100 dargestellt. Die zu dieser Schnittlinie III-III korrespondierende Schnittansicht ist in Figur 3 dargestellt. Mit anderen Worten ausgedrückt zeigt, die Figur 3 einen weiteren Querschnitt durch das erste in Figur 1 dargestellte Ausführungsbeispiel, welcher gegenüber dem in Figur 1 dargestellten Querschnitt senkrecht ist.

In der in Figur 3 dargestellten Ansicht ist eine der ersten Seitenflächen des ersten der ersten Blattlenker-Elemente 91-1 und eine der ersten Seitenflächen des ersten der zweiten Blattlenker-Elemente 92-1 zu erkennen. Das erste der ersten Blattlenker-Elemente 91-1 sowie das erste der zweiten Blattlenker-Elemente 92-1 ist mit dem Zwischenstück 80 verbunden, welches auch in Figur 3 -genau wie in Figur 1- senkrecht zur Schnittebene III-III angeordnet ist. In Kenntnis der Figur 1 wird aus Figur 3 insbesondere die dünnwandige Struktur der ersten und zweiten Blattlenker-Elemente 91-1, 91-2, 92-1, 92-2 deutlich. In diesem Ausführungsbeispiel umfasst die Flanschverbindung 100 weitere Blattlenker-Elemente 93-1, 93-2, 94-1, 94-2, nämlich zwei dritte Blattlenker-Elemente 93-1, 93-2 und zwei vierte Blattlenker-Elemente 94-1, 94-2. Die weiteren Blattlenker-Elemente 93-1, 93-2, 94-1, 94-2 stellen ebenfalls dünnwandige Strukturen dar, die im Wesentlichen den ersten und zweiten Blattlenker-Elementen 91-1, 91-2, 92-1, 92-2 entsprechen.

Mit anderen Worten ausgedrückt, umfasst die Flanschverbindung 100 in diesem Ausführungsbeispiel in einem dritten Last übertragenden Querschnitt eine Anordnung von zwei weiteren dritten räumlich zueinander versetzten Blattlenker-Elementen 93-1, 93-2, die sich in Nominallage der dritten Blattlenker-Elemente 93-1, 93-2 räumlich in jeweils einer Ebene erstrecken. Des Weiteren umfasst die Flanschverbindung 100 in diesem Ausführungsbeispiel in einem vierten Last übertragenden Querschnitt eine Anordnung von zwei weiteren vierten räumlich zueinander versetzten Blattlenker-Elementen 94-1, 94-2, die sich in Nominallage der vierten Blattlenker-Elemente 94-1, 94-2 räumlich in jeweils einer Ebene erstrecken. Auch die dritten und vierten Blattlenker-Elemente 93-1, 93-2, 94-1, 94-2 sind jeweils zueinander angewinkelt und mit einem weiteren Zwischenstück 50 verbunden, welches im Wesentlichen dem zuvor beschriebenen Zwischenstück 80 entspricht. Im Wesentlichen sind die dritten und vierten Blattlenker-Elemente 93-1, 93-2, 94-1, 94-2 zueinander und zu dem weiteren Zwischenstück 50 angeordnet wie die ersten und zweiten Blattlenker-Elemente 91-1, 91-2, 92-1, 92-2 zueinander und dem zuvor beschriebenen Zwischenstück 80 angeordnet sind. Dass heißt, auch die dritten Blattlenker-Element 93-1, 93-2 sind derart angeordnet, dass sich die Mittenebenen der dritten Blattlenker-Elemente 93-1, 93-2 auf einer Wirkungslinie der Flanschkraft W_{Fk} in einer gemeinsamen dritten ideellen Gelenklinie 13 schneiden. Des Weiteren sind auch die vierten Blattlenker-Element 94-1, 94-2 derart angeordnet, dass sich die Mittenebenen der vierten Blattlenker-Elemente 94-1, 94-2 auf einer Wirkungslinie der Flanschkraft W_{Fk} in einer gemeinsamen vierten ideellen Gelenklinie 14 schneiden, die zu der dritten ideellen Gelenklinie 13 beabstandet ist, jedoch zu dieser parallel verläuft. Ferner verlaufen die dritte ideelle Gelenklinie 13 sowie die vierte ideelle Gelenklinie 14 in diesem Ausführungsbeispiel orthogonal zu der ersten und der zweiten ideellen Gelenklinie 11, 12.

Die dritten und vierten Blattlenker-Elemente 93-1, 93-2, 94-1, 94-2 sind gegenüber den ersten und zweiten Blattlenker-Elementen 91-1, 91-2, 92-1, 92-2 also um einen Winkel von 90° verdreht, sodass auch die sich aus den vorgesehenen Blattlenker-Element-Paaren 91-1, 91-2, 92-1, 92-2, 93-1, 93-2, 94-1, 94-2 ergebenden Bewegungsebenen der Bauteile 1, 2 senkrecht aufeinander stehen. Da die vierten Blattlenker-Elemente 94-1, 94-2 direkt mit dem Flansch 90 und die dritten Blattlenker-Elemente 93-1, 93-2 mit der die zweiten Blattlenker-Elemente 92-1, 92-2 haltenden Bauteilstruktur verbunden sind, ergibt sich daraus eine kardanische Beweglichkeit des ersten und zweiten Bauteils 1, 2 zueinander. In anderen Ausführungsbeispielen können die dritten und/oder vierten Blattlenker-Elemente 93-1, 93-2, 94-1, 94-2 auch derart zueinander und zu den ersten und zweiten Blattlenker-Elementen 91-1, 91-2, 92-1, 92-2 angeordnet sein, dass die resultierende dritte und vierte ideelle Genlenklinie 13, 14 nicht jeweils senkrecht zu den ersten und zweiten ideellen Genlenklinien 11, 12 steht, sondern um einen anderen Winkel gegenüber diesen verdreht ist. In solchen Ausführungen stehen auch die sich aus den Blattlenker-Element-Paaren 91-1, 91-2, 92-1, 92-2, 93-1, 93-2, 94-1, 94-2 ergebenden Bewegungsebenen des ersten und zweiten Bauteils 1, 2 nicht senkrecht zueinander, sondern sind um einen anderen Winkel gegeneinander verdreht. Die dritten und vierten Blattlenker-Elemente 93-1, 93-2, 94-1, 94-2 sind also so angeordnet, dass ihre ideellen Gelenklinien 13, 14 derart ausgerichtet sind, dass die zu diesen ideellen Gelenklinien 13, 14 jeweils senkrecht stehenden Bewegungsebenen jeweils einen Winkel zu den zu den ideellen Gelenklinien 11 und 12 der ersten und zweiten Blattlenker-Elemente 91-1, 91-2, 92-1, 92-2 jeweils senkrecht stehenden Bewegungsebenen aufweist. Ferner können auch noch weitere Sätze, insbesondere Paare von Blattlenker-Elementen vorgesehen werden.

In diesem Ausführungsbeispiel ist der Flansch 90 rein beispielhaft über eine weitere Struktur 60 an die Bauteilstruktur des zweiten Bauteils 2 angebunden. Diese weitere Struktur ist in diesem Ausführungsbeispiel rein beispielhaft gezielt zur Beeinflussung oder Einschränkung der Beweglichkeit der Lenkeranordnungen ausgebildet.

In dem zuvor beschriebenen Ausführungsbeispiel kommen insgesamt acht Blattlenker-Elemente zum Einsatz. Es können aber auch erfindungsgemäße Flanschverbindungen 100 realisiert werden, welche lediglich die ersten Blattlenker-Elemente 91-1, 91-2 aufweisen, die beispielsweise anstelle einer Anbindung an ein Zwischenstück 80 direkt an den Flansch 90 der Flanschverbindung 100 angebunden sein können. Ferner können auch erfindungsgemäße Flanschverbindungen 100 ausgeführt werden, welche lediglich die ersten und zweiten Blattlenker-Elemente 91-1, 91-2, 92-1, 92-2 aufweisen. Ferner können auch erfindungsgemäße Flanschverbindungen 100 ausgeführt werden, bei welchen die Blattlenker-Elemente nicht paarweise vorgesehen sind, sondern ein Satz von Blattlenker-Elementen jeweils mehr als zwei Blattlenker-Elemente umfasst, beispielsweise drei, vier, fünf, sechs, sieben, acht oder mehr als acht erste Blattlenker-Elemente oder beispielsweise drei, vier, fünf, sechs, sieben, acht oder mehr als acht zweite Blattlenker-Elemente und so weiter.

Mit anderen Worten ausgedrückt, wird erfindungsgemäß die aus dem Stand der Technik bekannte Blattlenker-Anordnung vervielfacht -im zuvor beschriebenen Ausführungsbeispiel rein beispielhaft verdoppelt-, um so den Kraftfluss aufzuteilen. Weiterhin erlaubt das serielle Hinzufügen einer weiteren Anordnung von mehreren Blattlenker-Elementen mit beabstandeten, ideellen Gelenklinien beziehungsweise ideellen Gelenkachsen eine translatorische Verschiebung des Flansches 90 quer zur Hauptlastrichtung. Die Blattlenker-Elemente sind in diesem Ausführungsbeispiel als ebene, dünnwandige Strukturen in geschweißter Blechbauweise realisiert, welche in die angrenzenden Konstruktionen beziehungsweise Bauteile 1, 2 integriert sind.

In der Hauptlastrichtung der Flanschverbindung 100 werden die Blattlenker-Elemente auf Zug und Druck, das heißt in einem sehr hohen Ausnutzungsgrad belastet. Gesonderte Gelenke oder elastische Elemente sind nicht erforderlich. Dennoch können, beispielsweise unter Ausnutzung plastischer Deformationen, alle wahrscheinlichen, einzuhaltenden Fertigungstoleranzen üblicher Konstruktionen aufgenommen werden. So eignet sich die erfindungsgemäße Flanschverbindung insbesondere für kosten- und gewichtsoptimierte, jedoch hoch belastbare Verbindungen. Insbesondere eignet sich die erfindungsgemäße Flanschverbindung zur Verbindungen von Baugruppen in Schienenfahrzeugen, welche die vollen betrieblichen und teils außergewöhnliche Längskräfte übertragen müssen. Durch eine gezielte Steuerung und Einstellung der Elastizität quer zur Hauptlastrichtung werden thermische Verspannungen auch bei großen Bauteilabmessungen und ungünstigen Materialpaarungen, zum Beispiel bei der Verwendung von Aluminium und Stahl, gut beherrscht.

Obwohl die Erfindung im Detail durch insbesondere ein bevorzugtes Ausführungsbeispiel näher illustriert und beschrieben wurde, ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Verbindungsanordnung mit einem ersten Bauteil (1), einem zweiten Bauteil (2) und einer Flanschverbindung (100), mittels welcher das erste Bauteil (1) an dem zweiten Bauteil (2) fixiert ist, umfassend:
einen Flansch (90), mittels welchem die Flanschverbindung (100) samt dem mit der Flanschverbindung (100) verbundenen ersten Bauteil (1) an dem zweiten Bauteil (2) fixiert, insbesondere vernietet oder verschraubt ist;
**dadurch gekennzeichnet, dass**
die Flanschverbindung (100) in mindestens einem ersten Last übertragenden Querschnitt eine Anordnung von mindestens zwei räumlich zueinander versetzten ersten Blattlenker-Elementen (91-1, 91-2) aufweist, die sich in einer Nominallage jeweils zumindest teilweise räumlich in jeweils einer Ebene erstrecken und über welche das erste Bauteil (1) an den Flansch (90) angebunden ist.

2. Verbindungsanordnung nach Anspruch 1, wobei die mindestens zwei ersten Blattlenker-Elemente (91-1, 91-2) als plattenförmige Strukturen, insbesondere als Bleche ausgeführt sind.

3. Verbindungsanordnung nach einem der vorhergehenden Ansprüche, wobei die mindestens zwei räumlich zueinander versetzten ersten Blattlenker-Elemente (91-1, 91-2) über ein Zwischenstück (80) miteinander verbunden sind.

4. Verbindungsanordnung nach einem der vorhergehenden Ansprüche, wobei die Ebenen, innerhalb derer sich die mindestens zwei zueinander räumlich versetzten ersten Blattlenker-Elemente (91-1, 91-2) zumindest teilweise erstrecken, in Nominallage der ersten Blattlenker-Elemente (91-1, 91-2) zueinander angewinkelt sind.

5. Verbindungsanordnung nach Anspruch 4, wobei sich die Mittenebenen der ersten Blattlenker-Elemente (91-1, 91-2) auf einer Wirkungslinie der Flanschkraft (W_{Fk}) in einer gemeinsamen ersten ideellen Gelenklinie (11) schneiden.

6. Verbindungsanordnung nach einem der vorhergehenden Ansprüche, wobei die Flanschverbindung (100) in mindestens einem zweiten Last übertragenden Querschnitt ferner eine Verbindungsanordnung aus mindestens zwei räumlich zueinander und in Lastrichtung zu den ersten Blattlenker-Elementen (91-1, 91-2) versetzten zweiten Blattlenker-Elementen (92-1, 92-2) aufweist, die sich in Nominallage jeweils zumindest teilweise räumlich in jeweils einer Ebene erstrecken, wobei das erste Bauteil (1) über die ersten und zweiten Blattlenker-Elemente (91-1, 91-2, 92-1, 92-2) an den Flansch (90) angebunden ist.

7. Verbindungsanordnung nach Anspruch 5 und 6, wobei auch die mindestens zwei zweiten Blattlenker-Elemente (92-1, 92-2) als plattenförmige Strukturen, insbesondere als Bleche ausgeführt sind und wobei sich die Mittenebenen der zweiten Blattlenker-Elemente (92-1, 92-2) auf der Wirkungslinie der Flanschkraft (W_{Fk}) in einer gemeinsamen zweiten ideellen Gelenklinie schneiden (12), welche zu der ersten ideellen Gelenklinie (11) parallel verläuft.

8. Verbindungsanordnung nach Anspruch 7, wobei auch die mindestens zwei räumlich zueinander versetzten zweiten Blattlenker-Elemente (92-1, 92-2) über das Zwischenstück (80) miteinander und mit den ersten Blattlenker-Elementen (91-1, 91-2) verbunden sind.

9. Verbindungsanordnung nach einem der vorhergehenden Ansprüche, wobei die ersten Blattlenker-Elemente (91-1, 91-2) plastisch oder elastisch verformbar sind.

10. Verbindungsanordnung nach einem der vorhergehenden Ansprüche, wobei die Flanschverbindung (100) in mindestens einem dritten Last übertragenden Querschnitt eine Anordnung von mindestens zwei weiteren, räumlich zueinander versetzten Blattlenker-Elementen (93-1, 93-2) aufweist, die sich in Nominallage jeweils zumindest teilweise räumlich in jeweils einer Ebene erstrecken, welche jeweils gegenüber den Erstreckungsebenen der ersten Blattlenker-Elemente (91-1, 91-2) gedreht sind.

## Claims

1. Connection assembly having a first component (1), a second component (2), and a flange connection (100) by means of which the first component (1) is fixed to the second component (2), comprising:
a flange (90) by means of which the flange connection (100), including the first component (1) connected to the flange connection (100), is fixed to the second component (2), in particular riveted or screwed;
**characterized in that**
the flange connection (100) in at least one first load-transmitting cross section has an assembly of at least two first spring leaf elements (91-1, 91-2) which in spatial terms are mutually offset, and which in a nominal position in spatial terms extend in each case at least partially in a respective plane, and by way of which the first component (1) is attached to the flange (90).

2. Connection assembly according to Claim 1, wherein the at least two first spring leaf elements (91-1, 91-2) are embodied as plate-shaped structures, in particular as metal sheets.

3. Connection assembly according to one of the preceding claims, wherein the at least two first spring leaf elements (91-1, 91-2), which in spatial terms are mutually offset, are connected to one another by way of an intermediate part (80).

4. Connection assembly according to one of the preceding claims, wherein the planes within which the at least two first spring leaf elements (91-1, 91-2), which in spatial terms are mutually offset, at least partially extend are mutually angled in the nominal position of the first spring leaf elements (91-1, 91-2).

5. Connection assembly according to Claim 4, wherein the central planes of the first spring leaf elements (91-1, 91-2) intersect on an effective line of the flange force (W_{Fk}) in a common first imaginary joint line (11).

6. Connection assembly according to one of the preceding claims, wherein the flange connection (100) in at least one second load-transmitting cross section furthermore has a connection assembly of at least two second spring leaf elements (92-1, 92-2) which in spatial terms are mutually offset and in the direction of load are offset in relation to the first spring leaf elements (91-1, 91-2), and which in the nominal position extend in each case at least partially in spatial terms in a respective plane, wherein the first component (1) by way of the first and second spring leaf elements (91-1, 91-2, 92-1, 92-2) is attached to the flange (90) .

7. Connection assembly according to Claim 5 and 6, wherein the at least two second spring leaf elements (92-1, 92-2) are also embodied as plate-shaped structures, in particular as metal sheets, and wherein the central planes of the second spring leaf elements (92-1, 92-2) intersect on the effective line of the flange force (W_{Fk}) in a common second imaginary joint line (12) which runs parallel to the first imaginary joint line (11) .

8. Connection assembly according to Claim 7, wherein the at least two second spring leaf elements (92-1, 92-2), which in spatial terms are mutually offset, are also connected to one another and to the first spring leaf elements (91-1, 91-2) by way of the intermediate part (80).

9. Connection assembly according to one of the preceding claims, wherein the first spring leaf elements (91-1, 91-2) are plastically or elastically deformable.

10. Connection assembly according to one of the preceding claims, wherein the flange connection (100) in at least one third load-transmitting cross section has an assembly of at least two further spring leaf elements (93-1, 93-2) which in spatial terms are mutually offset, and which in the nominal position extend in each case at least partially in spatial terms in a respective plane, which planes are in each case rotated in relation to the planes of extent of the first spring leaf elements (91-1, 91-2).

## Revendications

1. Système de liaison comprenant une première pièce (1), une deuxième pièce (2) et un bridage (100), au moyen duquel la première pièce (1) est fixée à la deuxième pièce (2), comprenant :
une bride (90), au moyen de laquelle le bridage (100), ensemble avec la première pièce (1) reliée au bridage (100), est fixé à la deuxième pièce (2), en étant notamment riveté ou vissé ;
**caractérisé en ce que**
le bridage (100) a, dans au moins une première section transversale transmettant une charge, un agencement d'au moins deux premiers éléments (91-1, 91-2) de guidon à lames, qui sont décalés l'un par rapport à l'autre dans l'espace, qui s'étendent dans une position nominale respectivement au moins en partie dans l'espace dans respectivement un plan et par lesquels la première pièce (1) est reliée à la bride (90).

2. Système de liaison suivant la revendication 1, dans lequel les au moins deux premiers éléments (91-1, 91-2) de guidon à lames sont réalisés sous la forme de structures en forme de plaque, notamment sous la forme de tôles.

3. Système de liaison suivant l'une des revendications précédentes, dans lequel les deux premiers éléments (91-1, 91-2) de guidon à lames, décalés l'un par rapport à l'autre dans l'espace, sont reliés l'un à l'autre par une pièce (80) intermédiaire.

4. Système de liaison suivant l'une des revendications précédentes, dans lequel les plans, dans lesquels les au moins deux premiers éléments (91-1, 91-2) de guidon à lames, décalés l'un par rapport à l'autre dans l'espace, s'étendent au moins en partie, font un angle l'un par rapport à l'autre dans la position nominale des premiers éléments (91-1, 91-2) de guidon à lames.

5. Système de liaison suivant la revendication 4, dans lequel les plans médians des premiers éléments (91-1, 91-2) de guidon à lames se coupent sur une ligne d'action de la force (W_{Fk}) de bridage dans une première ligne (11) d'articulation idéale commune.

6. Système de liaison suivant l'une des revendications précédentes, dans lequel le bridage (100) a, dans au moins une deuxième section transversale transmettant une charge, en outre un bridage composé d'au moins deux deuxièmes éléments (92-1, 92-2) de guidon à lames, décalés l'un par rapport à l'autre dans l'espace, et dans la direction de charge par rapport aux premiers éléments (91-1, 91-2) de guidon à lames, qui, dans la position nominale, s'étendent respectivement au moins en partie dans l'espace dans respectivement un plan, dans lequel la première pièce (1) est reliée à la bride (90) par les premiers et deuxièmes éléments (91-1, 91-2, 92-1, 92-2) de guidon à lames.

7. Système de liaison suivant la revendication 5 et 6, dans lequel les au moins deux deuxièmes éléments (92-1, 92-2) de guidon à lames sont réalisés également sous la forme de structures de forme de plaque, en particulier sous la forme de tôles, et dans lequel les plans médians des deuxièmes éléments (92-1, 92-2) de guidon à lames se coupent (12), sur la ligne d'action de la force (W_{Fk}) de bridage dans une deuxième ligne d'articulation idéale commune, qui s'étend parallèlement à la première ligne (11) d'articulation idéale.

8. Système de liaison suivant la revendication 7, dans lequel les au moins deux deuxièmes éléments (92-1, 92-2) de guidon à lames, décalés l'un par rapport à l'autre dans l'espace, sont reliés également par la pièce (80) intermédiaire l'un à l'autre et aux premiers éléments (91-1, 91-2) de guidon à lames.

9. Système de liaison suivant l'une des revendications précédentes, dans lequel les premiers éléments (91-1, 91-2) de guidon à lames sont déformables plastiquement ou élastiquement.

10. Système de liaison suivant l'une des revendications précédentes, dans lequel le bridage (100) a, dans au moins une troisième section transversale transmettant une charge, un agencement d'au moins deux autres éléments (93-1, 93-2) de guidon à lames, décalés l'un par rapport dans l'espace, qui, dans la position nominale, s'étendent respectivement au moins en partie dans l'espace dans respectivement un plan, qui est tourné respectivement par rapport aux plans, dans lesquels s'étendent des premiers éléments (91-1, 91-2) de guidon à lames.
